# EUROPÄISCHE PATENTSCHRIFT

(11) **EP 0 425 810 B1**
(45) Veröffentlichungstag und Bekanntmachung des Hinweises auf die Patenterteilung: **29.09.1993**
(21) Anmeldenummer: 90118238.6
(22) Anmeldetag: 22.09.1990
(51) Int. Cl.: B60T 8/32, B60T 13/14

(54) **Kraftfahrzeug mit verschiedenen Bremsenbetätigungsprogrammen**
Vehicles with different brake actuation programs
Véhicules avec des programmes différents pour l'actuation des freins

(30) Priorität: 31.10.1989 DE 3936160
(43) Veröffentlichungstag der Anmeldung: 08.05.1991
(73) Patentinhaber: MAN Nutzfahrzeuge Aktiengesellschaft, 80976 München (DE)
(72) Erfinder: Kirchmeier, Klaus, D-8045 Ismaning (DE)

(56) Entgegenhaltungen:
- DE-A- 3 417 423
- DE-A- 3 505 268
- DE-A- 3 636 537

## Beschreibung

Die Erfindung betrifft ein Kraftfahrzeug mit Merkmalen entsprechend dem Oberbegriff des Anspruchs 1.

Die Erfindung geht dabei aus von der DE-A- 3 505 268.

Vorab einer eingehenden Diskussion derselben einige allgemeine Ausführungen zu Antiblockiersystemen. Diese ermöglichen eine gewisse Giermomentenbegrenzung für Fahrbahnoberflächen mit seitenweise unterschiedlichen Reibwerten. Dabei wird bezweckt, das Gieren um die Hochachse des Kraftfahrzeuges sowie die wirksamen Lenkkräfte in einem vertretbaren Maß zu begrenzen, ohne übermäßige Einbußen im Bremsweg hinnehmen zu müssen. Erreicht wird dies dadurch, daß der an den Bremsen der Räder wirksam werdende Bremsdruck so gesteuert wird, daß ein Blokkieren eines Rades auch bei unterschiedlichen Reibwerten zwischen Rädern der linken und rechten Fahrzeug-Seite nicht auftreten kann. Dabei kam in einem Fahrzeug je nach Hersteller bzw. Anbieter des Antiblockiersystemes nur eine von zwei verschiedenen Regel- und Steuerphilosophien zur Anwendung, nämlich entweder ein Bremsregelprogramm, das unter dem Fachbegriff "Select-Low-Steuerung " bekannt ist, oder ein anderes Bremsregelprogramm, das unter dem Fachbegriff "Modifizierte Individualregelung" bekannt ist. Die Regel- und Steuerphilosophie der "Select-Low-Steuerung " ist darauf ausgerichtet, daß trotz sensormäßig erkannter, unterschiedlich an den zu beiden Seiten des Kraftfahrzeuges gegebenen Rädern auftretender Reibwerte ein sich nach dem niedrigeren bzw. niedrigsten Reibwert richtender Bremsdruck erzeugt wird, mit dem die Bremsen aller Vorderachsen-Räder in gleicher Höhe beaufschlagt werden. Die Stabilität des Fahrzeuges und dessen Beherrschbarkeit hinsichtlich seiner Lenkung sind bei dieser Philosophie an sich günstig, aber der Bremsweg ist relativ lang.

Andere Verhältnisse werden mit dem zweiten bekannten Bremsenbetätigungsprogramm, der "Modifizierten Individualregelung" erzielt. Deren Philosophie ist darauf ausgerichtet, daß bei sensormäßig erkannten, unterschiedlich an den zu beiden Seiten des Kraftfahrzeuges gegebenen Rädern auftretenden Reibwerten zunächst ein sich nach dem niedrigeren bzw. niedrigsten Reibwert richtender Bremsdruck, mit dem die Bremsen aller Räder in gleicher Höhe beaufschlagt werden, erzeugt wird, und dann der Bremsdruck an den Bremsen jener Räder, an denen ein höherer Reibwert gegeben ist, kontinuierlich oder schrittweise bis zu einem für einen solchen Fall vorgegebenen Grenzwert erhöht wird. Als Ergebnis dieser Philosophie ergibt sich für das Fahrzeug eine nur mittelmäßige Stabilität und schlechte Beherrschbarkeit hinsichtlich seiner Lenkung im Vergleich zu der Philosophie, welche mit der "Select-Low-Steuerung " erreichbar ist. Der Bremsweg dagegen ist bei der "Modifizierten Individualregelung" relativ kurz und damit günstiger als bei der "Select-Low-Steuerung ".

Beim Kraftfahrzeug gemäß der DE-A- 3 505 268 wird von den Vorteilen solch unterschiedlicher Bremsregelungsprogramme Gebrauch gemacht, in dem mehrere solcher in den Elektronikteil der Regel- und Steuereinrichtung eingespeichert sind. Darüber hinaus verfügt das Kraftfahrzeug über eine-Differentialsperre, von deren Betätigung bzw. Einlegen das Umschalten von einem vorher wirksamen Bremsregelprogramm auf ein anderes abhängig ist und durch sensormäßige Erfassung ausgelöst wird. Diese Bindung der Umschaltung vom einen auf ein anderes Bremsregelprogramm an das Einlegen der Differentialsperre erscheint wenig sinnvoll, denn aus Sicht des allgemeinen Fahrbetriebes ist die Differentialsperrung nur in Ausnahmesituationen notwendig. Wann aber vom Fahrer, was ein sehr umfangreiches Wissen derselben über die Einsatzmöglichkeiten seines Antiblockiersystems voraussetzt, ein Bremsprogrammwechsel für nötig erachtet wird, dann muß er erst ein Einlegen der Differentialsperre, ob diese nun aus Sicht des Fahrbetriebes notwendig ist oder nicht, ausgelöst werden, um diesen Bremsprogrammwechsel zu vollziehen. Ohne das Einlegen der Differentialsperre hat der Fahrer jedoch keine Möglichkeit, beim Bremsen zwischen Stabilität des Fahrzeuges oder möglichst kurzen Bremsweg zu wählen. Er muß mit den vorstehend geschilderten Nachteilen des gerade wirksamen Bremsregelprogrammes leben.

Es ist daher Aufgabe der Erfindung, bei einem Kraftfahrzeug der eingangs genannten Art Vorkehrungen zu treffen, die die Nachteile bekannter Bremsenbetätigungs-Philosophien beseitigen und in allen Bremsfällen eine hervorragende Stabilität des Fahrzeuges mit verbleibender optimaler Lenkbarkeit und kürzestmöglichem Bremsweg garantieren.

Diese Aufgabe ist erfindungsgemäß durch ein Kraftfahrzeug mit den im Anspruch 1 angegebenen Merkmalen gelöst.

Anders als beim Kraftfahrzeug gemäß der DE-A- 3 505 268 wird dabei gemäß der Erfindung abhängig nur vom Betätigungsweg des Betriebsbremspedals ein Signal für einen Wechsel vom bisher wirksamen Bremsregelprogramm auf ein anderes ausgelöst. Damit ist es dem Fahrer, ohne daß dieser die spezifische Funktion seines Antiblockiersystems kennt, möglich, nur durch entsprechende Betätigung des Betriebsbremspedals gezielt auf den Ablauf eines Bremsvorganges Einfluß nehmen zu können. Wird das Betriebsbremspedal nur geringfügig niedergetreten, bleibt das momentane Bremsregelprogramm wirksam. Wird dagegen das Betriebsbremspedal weiter niedergetreten und dabei eine festgelegte Winkelstellung, in der ein Sensor oder Schalter angeordnet ist, überschritten, dann wird automatisch ein Wechsel in ein anderes Bremsregelprogramm ausgelöst. Der Fahrer kann daher durch entsprechende Betriebsbremspedalbetätigung die momentan vorherrschende Beschaffenheit der befahrenen Fahrbahn oder des befahrenen Geländes in vorausschauender Weise berücksichtigen im Hinblick darauf, daß beim jeweiligen Bremsvorgang entweder in größerem Maße die Stabilität, das Spurhalten des Fahrzeuges oder ein möglichst kurzer Bremsweg zu erzielen sind. Der Fahrer hat somit gewissermaßen die Möglichkeit, Prioritäten im jeweiligen Bremsfall zu setzen, die dem Fahrzeug, seiner Beladung und seiner momentanen Betriebsweise optimal angepaßt gerecht wird.

Vorteilhafte Ausgestaltungen der erfindungsgemäßen Lösung sind in den Unteransprüchen angegeben.

Nachstehend ist die Erfindung anhand verschiedener Ausführungsmöglichkeiten in Verbindung mit der Zeichnung näher erläutert. In der Zeichnung zeigen:
- Fig. 1: weitgehend schematisiert und soweit für das Verständnis erforderlich, eine Betriebsbremseinrichtung eines Kraftfahrzeuges mit zugehöriger Regel- und Steuereinrichtung,
- Fig. 2 und 3: je ein Betriebsbremspedal des Kraftfahrzeuges, welches jeweils unterschiedlichen Ausführungsvarianten der Erfindung zugeordnet ist.

In der Zeichnung sind als Teile des Kraftfahrzeuges die Räder einer lenkbaren Vorderachse mit 1, 3 und die Räder einer Hinterachse mit 2, 4 bezeichnet. Anstelle nur einer Vorderachse können auch zwei Vorderachsen mit jeweils lenkbaren Rädern, z.B. bei Schwerlastkraftwagen vorgesehen sein. Insofern ist nachstehend immer von Vorderachsen-Rädern die Rede. Die den Rädern des Fahrzeugs jeweils zugehörigen Bremsen sind in ihrer Gesamtheit je Rad mit 5 bzw. 6 bzw. 7 bzw. 8 bezeichnet. Diesen Bremsen ist eine Betriebsbremseinrichtung zugeordnet, die eine Regel- und Steuereinrichtung 9 umfaßt und durch ein Betriebsbremspedal 10 aktivierbar ist. In der Betriebsbremseinrichtung kommt Druckluft und/oder Hydraulikflüssigkeit als Druckmittel zum Einsatz. Die entsprechenden Druckmittelbereitstellungseinrichtungen sind in ihrer jeweiligen Gesamtheit mit 11 bzw. 12 bezeichnet und an eine Druckregel- und -steuereinrichtung 13 angeschlossen, die wiederum über entsprechende Druckleitungen mit den Betätigungsorganen der Bremsen 5, 6, 7, 8 verbunden ist. Die Regel- und Steuereinrichtung 9 umfaßt in einem Elektronikteil 14 ein elektronisches, rechnergesteuertes Antiblokkiersystem, das gegebenenfalls um eine rechnergesteuerte Antischlupfregelung erweitert sein kann. Der Elektronikteil 14 der Regel- und Steuereinrichtung 9 besteht im wesentlichen aus einem Mikroprozessor 15, wenigstens einem Datenspeicher 16, wenigstens einem Programmspeicher 17, einer Eingabeperipherie 18, einer Ausgabeperipherie 19 mit Signalverstärkungseinheiten und einer Signaleingangs- und -aufbereitungseinheit 20, welch letztere eine Reihe von Signalen, die Fahrzeugbetriebsdaten, Fahrzustandsdaten und dergleichen signalisieren, zugeführt bekommt, welche in ihr entsprechend umgesetzt werden. Bei diesen Signalen handelt es sich unter anderem um solche, die von die Raddrehung erfassenden Sensoren 22, 23, 24, 25 kommen, ferner gegebenenfalls um Geschwindigkeits-Signale, außerdem um Drehzahlsignale und Signale über andere Betriebsdaten sowie Signale, die die Stellung des Betriebsbremspedals 10 angeben bzw. für dessen Betätigungsstellung repräsentativ sind. Die besagten Teile 15, 16, 17, 18, 19, 20 sind innerhalb des Elektronikteils 14 der Regel- und Steuereinrichtung 9 über Datenkanäle an ein Datenbussystem 21 angeschlossen und stehen hierüber in gemeinsamer oder gegenseitiger Kommunikation mit dem Mikroprozessor 15.

In den Elektronikteil 14 der Regel- und Steuereinrichtunq 9 sind wenigstens zwei auf verschiedene Betätigungsweisen der Bremsen 5, 6, 7, 8 ausgerichtete Bremsregelungsprogramme eingespeichert, und zwar in den/die Programmspeicher 17 und Datenspeicher 16. Diese verschiedenen Bremsregelungsprogramme sind wahlweise vom Fahrer durch unterschiedlich grobe - wegabhängige - Betätigung des Betriebsbremspedals 10 aktivierbar.

Hierfür werden für Fahrzeuge, die in der Regel nur auf dem üblichen Straßennetz oder in leichtem Gelände betrieben werden, entsprechend den dort üblicherweise vorherrschenden Verhältnissen angepaßte Bremsregelungsprogramme vorgesehen, die sich von jener Bremsenbetätigungsphilosophie unterscheiden, die in Verbindung mit Kraftfahrzeugen zur Anwendung kommt, welche grundsätzlich auch für Betrieb in schwierigem bis schwerstem Gelände zum Einsatz kommen.

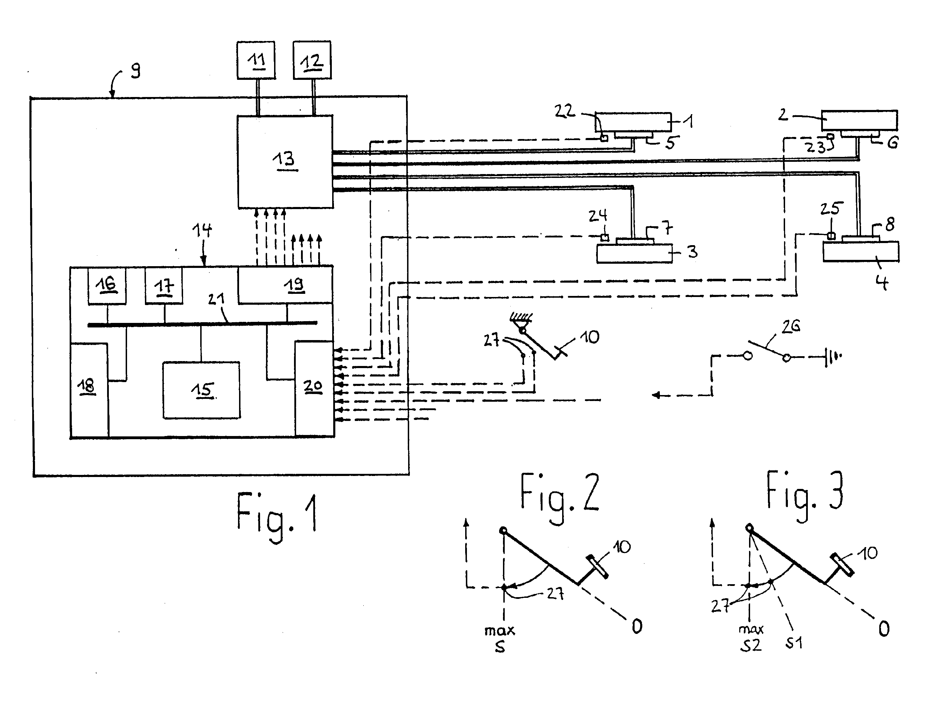

Im erstgenannten Fall, also bei Kraftfahrzeugen, die hauptsächlich im üblichen Straßennetz zum Einsatz kommen, sind in den Elektronikteil 14 der Regel- und Steuereinrichtung 9 für den Blockierschutz ein erstes Bremsregelungsprogramm - "Select-Low-Steuerung" genannt - und ein zweites Bremsregelungsprogramm - "Modifizierte Individualregelung" genannt - eingespeichert. Beide Bremsregelungsprogramme sind für sich gesehen hinsichtlich ihrer Regel- und Steuercharakteristik, d.h. hinsichtlich ihrer Einflußnahme auf einen Bremsvorgang - wie eingangs erwähnt - bekannt. Durch die Einprogrammierung beider Bremsregelungsprogramme hat der Fahrer nunmehr die Möglichkeit, die Vorteile des jeweiligen Bremsregelungsprogrammes auszunutzen, jedoch dessen eingangs erwähnte Nachteile zu eliminieren. Diese Einflußnahme auf einen Bremsvorgang durch den Fahrer mit entsprechender Auswahl des jeweiligen Bremsregelungsprogramme geschieht durch eine entsprechende Betätigung des Betriebsbremspedals 10, und zwar abhängig von dessen Stellung beim Durchtreten in Richtung Maximalstellung. Das dieser Ausführungsvariante der Erfindung zugehörige Betriebsbremspedal 10 ist mit seinen für das Verständnis wesentlichen Betriebsstellungen in Fig. 2 dargestellt.

Im Falle einer Betätigung des Betriebsbremspedals 10 für Teilbremsung erfolgt eine Abrufung des ersten Bremsregelungsprogrammes - "Select-Low-Steuerung" - , durch das bei von den Sensoren 22, 23, 24, 25 erkannten, unterschiedlich an den zu beiden Seiten des Kraftfahrzeuges gegebenen Rädern 1, 2, 3, 4 auftretenden Reibwerten (µ-Split) ein sich nach dem niedrigeren bzw. niedrigsten Reibwert richtender Bremsdruck initiiert wird, mit dem die Bremsen 5, 7 aller Vorderachsen-Räder 1, 3 des Kraftfahrzeuges in gleicher Höhe (p ₗᵢₙₖₛ = p _{rechts}) beaufschlagt werden. Die Räder 2, 4 der Hinterachse(n) werden dagegen auf herkömmliche Weise individual abgebremst.

Sofern jedoch eine Vollbremsung mit vollständigem Durchtreten des Betriebsbremspedals 10 notwendig ist, wird bei Erreichen einer im Bereich der Maximalstellung des Betriebsbremspedals 10 liegenden Schaltschwelle S durch ein entsprechendes Signal im Elektronikteil 14 der Regel- und Steuereinrichtung 9 ein Programmwechsel initiiert und das zweite eingespeicherte Bremsregelungsprogramm - "Modifizierte Individualregelung" - abgerufen. Dieses Bremsregelungsprogramm wird dann in der Weise wirksam, daß bei von den Sensoren 22, 23, 24, 25 erkannten, unterschiedlich an den zu beiden Seiten des Kraftfahrzeuges gegebenen Rädern 1, 2, 3, 4 auftretenden Reibwerten (µ-Split) zunächst ein sich nach dem niedrigeren bzw. niedrigsten Reibwert richtender Bremsdruck, mit dem die Bremsen 5, 6 aller Vorderachsen-Räder 1, 3 des Kraftfahrzeuges in gleicher Höhe beaufschlagt werden, initiiert und dann der Bremsdruck an den Bremsen jenes Vorderachsen-Rades bzw. jener Vordrachsen-Räder, an dem bzw. an denen ein höherer Reibwert gegeben ist, kontinuierlich oder schrittweise bis zu einem für einen solchen Fall vorgegebenen Grenzwert programmäßig gesteuert erhöht. Die Räder 2, 4 der Hinterachse(n) werden auch in diesem Fall in bekannter herkömmlicher Art individual abgebremst. Damit ist sichergestellt, daß, solange das Betriebsbremspedal 10 sich nicht in seiner Maximalstellung befindet, die Stabilität, Spurhaltung und Lenkbarkeit des Fahrzeuges optimal gewährleistet sind, jedoch dann, wenn wirklich einmal die maximalen Bremskräfte notwendig sind, die Priorität mehr auf Bremswegverkürzung gelegt wird.

Bei einer alternativen Ausführungsform der Erfindung, die einem Kraftfahrzeug zugeordnet ist, welches sowohl im normalen Straßenverkehr als auch im Gelände betreibbar sein soll, ist im Arbeitsbereich des Fahrers, z.B. am Armaturenbrett, zusätzlich ein Wahlschalter 26 (dargestellt in Verbindung mit Fig. 1) angeordnet, der dem Elektronikteil 14 der Regel- und Steuereinrichtung 9
a) in seiner einen Schaltstellung den Betrieb des Fahrzeugs auf Straße signalisiert, wobei in diesem Fall die beiden Bremsregelungsprogramme in der wie vorstehend be schriebenen Art und Weise abgerufen und wirksam werden, jedoch
b) in einer zweiten Schaltstellung den Betrieb des Fahrzeugs im Gelände signalisiert, wobei gegenüber Straßen-Betrieb auf die Erfordernisse des Geländes-Betriebes abgestellte andere Bremsregelungsprogramme abrufbar sind und wirksam werden können.

Für eine Fahrt im Gelände ist gegenüber reinem Straßenbetrieb eine Reihe geländespezifischer Faktoren zu berücksichtigen, wie die Beschaffenheit und der Zustand des Untergrundes und der Oberfläche des befahrenen Geländes, ebenso die Steigung bzw. das Gefälle oder der Böschungswinkel des befahrenen Geländes. Um das Fahrzeug im Gelände solchen dort auftretenden unterschiedlichen Verhältnissen angepaßt sicher bremsen zu können, ist in den Elektronikteil 14 der Regel- und Steuereinrichtung 9
a) ein spezielles Gelände-Bremsregelungsprogramm eingespeichert, das bei Teilbremsungen, bei denen das Betriebsbremspedal 10 (Fig. 2) nicht ganz durchgetrten wird, bei in zweiter (Gelände-) Schaltstellung befindlichem Wahlschalter 26 unterhalb einer bestimmten Geschwindigkeitsschwelle des Kraftfahrzeuges, z.B. 40 km/h, wirksam ist und den Gesetzmäßigkeiten des zweiten Straßen-Bremsregelungsprogrammes - "Modifizierte Individualregelung" - gehorcht, aber mit der Maßgabe, daß beim Bremsen der Räder gegenüber Straßenfunktion ein größerer Radschlupf zugelassen wird, und
b) als weitere Option eine zweite Geschwindigkeitsschwelle (kleiner/gleich der ersten) eingegeben ist, unterhalb welcher bei Vollbremsungen, bei denen das Betriebsbremspedal 10 (Fig. 2) zumindest weitestgehend in Richtung Maximalstellung durchgetreten ist, bei Erreichen der Schaltschwelle S das vorher wirksame Gelände-Bremsregelungsprogramm abgeschaltet und eine solche Druckbeaufschlagung der Bremsen 5, 6, 7, 8 initiiert wird, daß ein Blockieren der Räder 1, 2, 3, 4 möglich ist, d.h. ausdrücklich zugelassen wird.

Dadurch, daß während des Wirksamseins des Gelände-Bremsregelungsprogrammes ein gegenüber dem normalen Straßenprogramm wesentlich höherer Radschlupf zugelassen wird, erhöht sich die Abbremswirkung speziell bei losem Untergrund wie Kies oder Tiefschnee merklich, denn vor den Rädern können sich Materialkeile aufbauen, die wesentlich mit zur Abbremsung beitragen. Dadurch, daß unterhalb der zweiten Geschwindigkeitsschwelle das vorherige Gelände-Bremsregelungsprogramm und damit auch das Antiblockiersystem vollständig abgeschaltet ist, wird speziell bei Abfahrten bzw. Talfahrt in steilem Gelände der vorhandene Reibwert eines losen Untergrundes vollständig ausgenutzt.

Eine noch feinere, weil die im Gelände den dort auftretenden mehr oder weniger schwierigen Boden- bzw. Oberflächenverhältnissen noch differenzierter angepaßt sichere Bremsungermöglichende Lösung ist mit einer weiteren Ausbaustufe der Erfindung erzielbar, der das in Fig. 3 dargestellte Betriebsbremspedal 10 zugeordnet ist. Bedingt durch diese Betriebsbremspedal-Mimik erhält der Fahrer auch bei in zweiter (Gelände-)Schaltstellung befindlichem Wahlschalter 26 die Möglichkeit, in weniger schwierigem Gelände zusätzlich zu den vorbeschriebenen Wahlmöglichkeiten gemäß a) und b) das Straßen-Bremsregelungsprogramm - "Modifizierte Individualregelung" - abzurufen, und zwar bei Teilbremsungen, bei denen das Betriebsbremspedal 10 nur wenig in Richtung Maximalstellung durchgetreten wird, bis zum Erreichen der ersten Schaltschwelle S1 (Fig. 3). Diese Option wird bei Überschreiten der ersten Schaltschwelle S1 wieder unwirksam und es wird ein Wechsel zum Gelände-Bremsregelungsprogramm initiiert. Bei Erreichen der Schaltschwelle S2 durch entsprechend starke Betätigung des Betriebsbremspedals 10 wird dann die vorstehend unter Punkt b) erläuterte Option abgerufen, so daß dann ein Blockieren der Räder beim Bremsenzugelassen wird.

Auf diese Weise hat der Fahrer die Möglichkeit, z.B. in leichtem Gelände mit trockenem harten Untergrund und mit wenig Steigungen oder Gefällestrecken beim Bremsen Verhältnisse wie im reinen Straßenbetrieb herbeizuführen. Im schwierigeren Gelände dagegen werden dann wieder die wie vorstehend in Verbindung mit der zweiten Ausführungsform der Erfindung beschriebenen positiven Ergebnisse erzielt.

Die Schaltschwellen S (Fig. 2) bzw. S1, S2 (Fig. 3), bei deren Erreichen bzw. Überschreiten ein Programmwechsel bzw. eine andere Bremsbetriebsweise initiiert wird, können auf verschiedene Art und Weise realisiert sein, beispielsweise entweder durch mechanische Schalter oder elektrische Potentiometer, die in Abhängigkeit von der Bewegung des Betriebsbremspedals 10 betätigt werden, oder durch Druckschalter, die am Steuerdruckkreis des Betriebsbremspedals 10 angeschlossen sind. Diese pauschal mit 27 bezeichneten Organe liefern je nach Betätigungszustand "High-" bzw. "Low-"Signale, oder codierte Digitalsignale, die dem Elektronikteil 14 der Regel- und Steuereinrichtung 9 zugeführt werden. Diese Organe 27 können in vorteilhafter Weise auch so ausgeführt sein, daß die Schaltschwellen durch vom Fahrer bei der Betätigung des Betriebsbremspedals 10 fühlbare Druckpunkte markiert sind, welche erst überwunden werden müssen, um ein Auslösen des betreffenden Schaltschwellen-Signals zu bewirken.

## Patentansprüche

1. Kraftfahrzeug mit einer auf die Bremsen (5, 6, 7, 8) von dessen Rädern (1, 2, 3, 4) wirkenden Betriebsbremsanlage, die eine Regel- und Steuereinrichtung (9) mit elektronischem, rechnergesteuerten Antiblockiersystem, gegebenenfalls auch einer Antriebsschlupfregelung umfaßt, in deren Elektronikteil (14, 15, 16, 17, 18, 19, 20, 21) wenigstens zwei verschiedene, eine unterschiedliche Bremsenbetätigung bewirkende Bremsregelungsprogramme eingespeichert sind, und daß ein Organ vorgesehen ist, von dessen erfaßter Betätigung ein Umschalten vom vorher wirksamen Bremsregelungsprogramm auf ein anderes auslösbar ist, dadurch gekennzeichnet, daß das besagte Organ das Betriebsbremspedal (10) ist, mit dem abhängig vom Betätigungsweg ein Signal für einen Wechsel vom einen auf ein anderes Bremsregelprogramm auslösbar ist.

2. Kraftfahrzeug nach Anspruch 1, dadurch gekennzeichnet, daß in den Elektronikteil (14) der Regel- und Steuereinrichtung (9) für einen Blockierschutz ein erstes Bremsregelungsprogramm - "Select-Low-Steuerung" genannt - und ein zweites Bremsregelungsprogramm - "Modifizierte Individualregelung" genannt - eingespeichert sind, wobei im Fall einer entsprechenden Betätigung des Betriebsbremspedals (10) vor Erreichen einer Schaltschwelle (S, Fig. 2) das erste Bremsregelungsprogramm abgerufen und wirksam ist und dabei, trotz von Sensoren (22, 23, 24, 25) erkannten unterschiedlichen, an den zu beiden Seiten des Kraftfahrzeugs auftretenden Reibwerten ein sich nach dem niedrigeren bzw. niedrigsten Reibwert richtender Bremsdruck initiiert wird, mit dem die Bremsen (5, 7) aller Vorderachsen-Räder (1, 3) in gleicher Höhe (pₗᵢₙₖₛ = p_{rechts}) beaufschlagtwerden, und wobei im Fall einer entsprechenden weiteren Betätigung des Betriebsbremspedals (10) bei Erreichen bzw. Überschreiten der Schaltschwelle (S, Fig. 2) ein Programmwechsel initiiert und das zweite Bremsregelungsprogramm abgerufen wird, in welchem Fall bei von den Sensoren (22, 23, 24, 25) erkannten unterschiedlichen, an den zu beiden Seiten des Kraftfahrzeuges gegebenen Rädern (1, 2, 3, 4) auftretenden Reibwerten zunächst ein sich nach dem niedrigeren bzw. niedrigsten Reibwert richtender Bremsdruck, mit dem die Bremsen (5, 7) aller Vorderachsen-Räder (1, 3) in gleicher Höhe (pₗᵢₙₖₛ = p_{rechts}) beaufschlagt werden, initiiert wird und dann der Bremsdruck an der Bremse bzw. den Bremsen jenes Vorderachsen-Rades bzw. jener Vorderachsen-Räder, an dem bzw. an denen ein höherer Reibwert gegeben ist, kontinuierlich oder schrittweise bis zu einem für einen solchen Fall vorgegebenen Grenzwert erhöht wird.

3. Kraftfahrzeug nach Anspruch 2, dadurch gekennzeichnet, daß im Arbeitsbereich des Fahrers ein Wahlschalter (26) angeordnet ist, der dem Elektronikteil (14) der Regel- und Steuereinrichtung (9)
a) in seiner einen Schaltstellung den Betrieb des Fahrzeuges auf Straße signalisiert, wobei die beiden Bremsregelungsprogramme in der genannten Art und Weise abgerufen und wirksam werden, jedoch
b) in einer zweiten Schaltstellung den Betrieb des Fahrzeuges im Gelände signalisiert, wobei gegenüber Straßenbetrieb auf die Erfordernisse des Geländebetriebes abgestellt andere Bremsregelungsprogramme abrufbar sind und wirksam werden können.

4. Kraftfahrzeug nach Anspruch 3, dadurch gekennzeichnet, daß, damit dieses im Gelände den dort auftretenden unterschiedlichen Boden-, Untergrund-, Oberflächen-, Topographie-Verhältnissen angepaßt sicher bremsbar ist, in den Elektronikteil (14) der Regel- und Steuereinrichtung (9)
a) ein spezielles Gelände-Bremsregelungsprogramm eingespeichert ist, das bei Teilbremsungen, bei denen das Betriebsbremspedal (10) nicht ganz durchgetreten wird, bei in zweiter (Gelände-)Schaltstellung befindlichem Wahlschalter (26) unterhalb einer bestimmten Geschwindigkeitsschwelle, beispielsweise 40 km/h, wirksam ist und den Gesetzmäßigkeiten des zweiten Straßen-Bremsregelungsprogrammes - "Modifizierte Individualregelung" - mit der Einschränkung gehorcht, daß beim Bremsen der Räder gegenüber Straßenfunktion ein größerer Radschlupf zugelassen wird, und
b) als weitere Option eine zweite Geschwindigkeitsschwelle (kleiner/gleich der ersten) eingegeben ist, unterhalb welcher bei Vollbremsungen, bei denen das Betriebsbremspedal (10) zumindest weitestgehend in Richtung Maximalstellung durchgetreten ist, bei Erreichen der Schaltschwelle (S, Fig. 2) das vorher wirksame Gelände-Bremsregelungsprogramm abgeschaltet und eine solche Druckbeaufschlagung der Bremsen (5, 6, 7, 8) initiiert wird, daß ein Blockieren der Räder (1, 2, 3, 4) möglich ist.

5. Kraftfahrzeug nach Anspruch 4, dadurch gekennzeichnet, daß, damit dieses im Gelände den dort auftretenden mehr oder weniger schwierigen Verhältnissen noch differenzierter angepaßt sicher bremsbar ist, der Fahrer auch bei in zweiter (Gelände-)Schaltstellung befindlichem Wahlschalter (26) die Möglichkeit erhält, in weniger schwierigem Gelände zusätzlich zu den genannten Wahlmöglichkeiten gemäß a) und b) das Straßen-Bremsregelungsprogramm - "Modifizierte Individualregelung" - abzurufen, und zwar bei Teilbremsungen, bei denen das Betriebsbremspedal (10) nur wenig in Richtung Maximalstellung durchgetreten wird, bis zum Erreichen einer ersten Schaltschwelle (S1, Fig. 3), wobei diese Option dann wieder unwirksam und ein Wechsel zum Gelände-Bremsregelungsprogramm ausgelöst wird, wenn durch entsprechende Betätigung des Betriebsbremspedals (10) die Schaltschwelle (S1) überschritten wird.

6. Kraftfahrzeug nach einem der Ansprüche 2 bis 5, dadurch gekennzeichnet, daß die Schaltschwellen, bei deren Erreichen bzw. Überschreiten ein Programmwechsel bzw. eine andere Bremsweise initiiert wird, entweder durch mechanische Schalter oder elektrische Potentiometer, die in Abhängigkeit von der Bewegung des Betriebsbremspedals (10) betätigt werden, oder durch Druckschalter, die am Steuerdruckkreis des Betriebsbremspedals (10) angeschlossen sind, vorgegeben sind, welche Organe (27) je nach Betätigungszustand "High"- bzw. "Low"-Signale oder codierte Digitalsignale an den Elektronikteil (14) der Regel- und Steuereinrichtung (9) liefern.

7. Kraftfahrzeug nach Anspruch 6, dadurch gekennzeichnet, daß die Schaltschwellen (S; S1, S2) durch vom Fahrer bei der Betätigung des Betriebsbremspedals (10) fühlbare Druckpunkte markiert sind, welche erst überwunden werden müssen, um ein Auslösen des betreffenden-Schaltschwellen-Signals zu bewirken.

## Claims

1. Motor vehicle with a service brake system acting on the brakes (5,6,7,8) of the vehicle's wheels (1,2,3,4) and comprising a regulating and control unit (9) with an electronic, computer-controlled anti-lock braking system, and possibly an anti-spin regulator, in the electronic part of which service brake system (14,15,16,17,18,19,20,21) at least two different brake regulating programs are stored, each of which triggers a different brake actuation, and that an organ is provided whose recorded actuation can trigger a switching from the previously active brake control program to another, characterised in that the said organ is the service brake pedal (10) which, in dependence of the pedal travel, can trigger a signal for changing from one brake control program to another.

2. Motor vehicle as under Claim 1, characterised in that a first brake regulating program called "Select Low Control" and a second brake regulating program called "Modified Individual Control" are stored in the electronic part (14) of the regulating and control unit (9) to provide an anti-lock protection, and, if the service brake pedal (10) is correspondingly actuated, the first brake regulating program is called up and activated before a switching threshold (S, Fig 2) is reached, and, despite different friction values that occur on either side of the vehicle and are recognised by sensors (22,23,24,25), a brake pressure is initiated that goes by the lower or lowest friction value, which brake pressure acts equally on the brakes (5,7) of all front wheels (1,3) (p_{left} = p _{right}), and, in the event of a corresponding further actuation of the service brake pedal (10), when the switching threshold (S, Fig 2) has been reached or is exceeded, a program change is triggered and the second brake regulating program is called up, in which case, if different friction values occur at the wheels (1,2,3,4) on either side of the vehicle and are recognised by sensors (22,23,24,25), a brake pressure is at first initiated that goes by the lower or lowest friction value, which brake pressure acts equally on the brakes (5,7) of all front wheels (1,3) (p_{left} = p_{right}), and which brake pressure acting on the brake(s) of that (those) front axle wheel(s) on which there is a higher friction value is increased continuously or in steps until a limit value specified for such a case is reached.

3. Motor vehicle as under Claim 2, characterised in that a selector switch (26) fitted in the driver's working area signals to the electronic part (14) of the regulating and control unit (9)
a) the operation of the vehicle on a road if said selector switch (26) is in the one switching position, the two brake regulating programs being called up as described above, but,
b) the operation of the vehicle in off-road terrain, if said selector switch (26) is in a second switch position, which in contrast to road operation makes it possible to call up and activate other brake regulating programs in order to meet the requirements of off-road operation.

4. Motor vehicle as under Claim 3, characterised in that, in order to keep the vehicle adjusted to the various different soil, subsoil, surface and topographical conditions and safely brakable, the electronic part (14) of the regulating and control unit (9) is provided with
a) a special off-road terrain brake regulating program which, in the event of partial brakings in which the service brake pedal (10) is not fully depressed, is active below a certain speed threshold, eg 40 km/h, if the selector switch (26) is in the second (off-road terrain) switching position and which meets the regularities of the second on-road brake regulating program - "Modified Individual Regulation" - with the qualification that the wheels are, when being braked, allowed a larger degree of slip as opposed to the on-road function and
b) a second speed threshold (smaller than/equivalent to the first) as another option, below which the previously active off-road terrain brake regulating program is switched off during emergency braking, in which the service brake pedal (10) has been depressed by at least the largest portion of the pedal travel towards the maximum position, when the switching threshold (S, Fig 2) has been reached and such a pressurisation of the brakes (5,6,7,8) is initiated that the wheels (1,2,3,4) may lock up.

5. Motor vehicle as under Claim 4, characterised in that, when operating in less difficult terrain, the driver has, even if the selector switch (26) is in the second (off-road terrain) switching position, the possibility of calling up the road brake regulating program - "Modified Individual Regulation" - in addition to the mentioned options as per a) and b), ie in the event of partial brakings in which the service brake pedal (10) has been depressed by only a small portion of the pedal travel towards the maximum position until a first switching threshold (S1, Fig 3) has been reached so that the vehicle is adjusted in even smaller steps to the more or less difficult conditions occurring in off-road terrain and can be safely braked, this option being deactivated again and a change to the off-road brake regulating program being triggered when the switching threshold is exceeded by means of a corresponding actuation of the service brake pedal (10).

6. Motor vehicle as under one of the Claims 2 to 5, characterised in that the switching threshold at which a program change or another kind of braking operation is triggered when they are reached or exceeded are preset either by mechanical switches or electrc potentiometers which are actuated according to the movement of the service brake pedal (10), or by pressure switches connected to the control pressure circuit of the service brake pedal (10), which organs (27) send, in dependence of the actuated state, "high" or "low", signals or coded digital signals to the electronic part (14) of the regulating and control unit (9).

7. Motor vehicle as under Claim 6, characterised in that the switching thresholds (S; S1, S2) are marked by means of pressure points noticeable to the driver when he actuates the service brake pedal (10), which pressure points have to be overcome if the relevant switching threshold signal is to be triggered.

## Revendications

1. Véhicule équipé d'une installation de frein agissant sur les freins (5, 6, 7, 8) des roues (1, 2, 3, 4), avec une installation de commande et de régulation (9) à système anti-blocage électronique commandé par calculateur, avec le cas échéant une régulation de patinage, dans la partie électronique (14, 15, 16, 17, 18, 20, 21), contient au moins deux programmes de régulation de frein, différents, assurant une commande de frein différente et un organe dont la manoeuvre déclenche une commutation d'un programme de régulation de frein agissant précédemment sur un autre programme, véhicule caractérisé en ce que l'organe est la pédale de frein (10) qui, en fonction de la course de manoeuvre, déclenche un signal pour passer d'un programme de régulation de frein à un autre programme.

2. Véhicule automobile selon la revendication 1, caractérisé en ce que dans la partie électronique (14) de l'installation de régulation et de commande (9), pour une protection anti-blocage, il est enregistré un premier programme de régulation de frein appelé "Commande Select-Low" et un second programme de régulation de frein appelé "Régulation Individuelle Modifiée" et dans le cas d'une manoeuvre correspondante de la pédale de fonctionnement (10), avant d'atteindre un seuil de commutation (S, figure 2), le premier programme de régulation de freinage est appelé et agit et ainsi malgré les coefficients d'adhérence différents des deux côtés du véhicule, reconnus par les capteurs (22, 23, 24, 25), cela initialise une pression de frein correspondant au coefficient d'adhérence le plus faible, pour solliciter les freins (5, 7) de toutes les roues du ou des essieux avant (1, 3) à la même amplitude (P_{gauche} = P_{droite}), et dans le cas d'une poursuite de la commande de la pédale de frein (10), lorsqu'on atteint ou dépasse le seuil de commutation (S, figure 2), cela initialise un changement de programme et le second programme de régulation de frein est appelé, et dans ce cas pour des coefficients d'adhérence différents, décelés par les détecteurs (22, 23, 24, 25) pour les roues (1, 2, 3, 4) différentes des deux côtés du véhicule, il s'établit une pression de frein en fonction du coefficient d'adhérence le plus faible pour solliciter à la même amplitude les freins (5, 7) de toutes les roues des essieux avant (1, 3) (P_{gauche} = P_{droite}) puis on augmente la pression de frein du ou des freins de chaque roue de l'essieu avant ou des roues des essieux avant correspondant au coefficient d'adhérence le plus élevé, en continu ou pas à pas jusqu'à atteindre la valeur limite correspondant à ce cas.

3. Véhicule automobile selon la revendication 2, caractérisé en ce que dans la zone d'action du conducteur il est prévu un commutateur sélecteur (26) permettant pour la partie électronique (14) de l'installation de régulation et de commande (9)
a) dans une première position de commutation, de signaler le fonctionnement du véhicule sur route, les deux programmes de régulation de frein étant appelés de la manière indiquée et agissant ainsi et
b) dans une seconde position de commutation, de signaler le fonctionnement du véhicule en tout terrain, avec, par rapport au fonctionnement sur route, un réglage en fonction des conditions particulières du fonctionnement tout terrain, correspondant à un autre programme de régulation de frein qui agit alors.

4. Véhicule selon la revendication 3, caractérisé en ce que du fait de l'adaptation aux terrains et aux conditions différentes de sols de sous-sols, de surfaces, de topographies ainsi adapté, dans la partie électronique (14) de l'installation de régulation et de commande (9), on a
a) enregistré un programme de régulation de frein spécial pour le tout terrain qui en cas de freinage partiel, lorsque la pédale de frein (10) n'est pas enfoncée complètement, le commutateur sélecteur (26) occupant sa seconde position de commutation (position tout terrain), en dessous d'un certain seuil de vitesse, par exemple 40 km/h, agit et autorise, selon les conditions du second programme de régulation de freinage sur route "Régulation Individuelle Modifiée" peut travailler avec une limitation de façon que pour le freinage des roues on dispose d'un glissement plus important que pour un fonctionnement sur route et
b) comme autre option, on introduit un second seuil de vitesse (petit/égal au premier) en dessous duquel, pour un freinage total, lorsque la pédale de frein (10) est au moins pratiquement enfoncée jusqu'à sa position d'enfoncement maximale, lorsqu'on atteint le seuil de commutation (S, figure 2) le programme de régulation de frein en tout terrain utilisé jusqu'alors soit coupé et que soit autorisée une mise en pression des freins (5, 6, 7, 8) permettant un blocage des roues (1, 2, 3, 4).

5. Véhicule automobile selon la revendication 4, caractérisé en ce que pour permettre son freinage en tout terrain, de manière adaptée aux conditions plus ou moins difficiles qui s'y présentent mais de manière néanmoins différentiée, le conducteur puisse, même lorsque le commutateur sélecteur (26) occupe sa seconde position de commutation (position tout terrain) disposer de possibilités de sélection supplémentaires pour un terrain moins difficile selon a) et b) pour appeler le programme de régulation de frein sur route "Régulation Individuelle Modifiée" et cela pour des freinages partiels lorsque la pédale de frein (10) n'est enfoncée que faiblement en direction de la position maximale, jusqu'à atteindre un premier seuil de commutation (S₁, figure 3) cette option étant de nouveau inactive et déclenchant un changement pour le programme de régulation de frein en tout terrain lorsque par une manoeuvre appropriée de la pédale de frein (10) on dépasse le seuil de commutation (S₁).

6. Véhicule automobile selon l'une des revendications 2 à 5, caractérisé en ce que les seuils de commutation qui, lorsqu'ils sont atteints ou dépassés, commandent un changement de programme ou un autre mode de freinage, sont actionnés soit par des commutateurs mécaniques ou des potentiomètres électriques mis en oeuvre en fonction du mouvement de la pédale de frein (10) ou encore par un commutateur poussoir relié au circuit de commande de pression de la pédale de frein (10), ces organes (27), suivant l'état d'actionnement, livrent des signaux "haut" ou "bas", ou des signaux numériques codés pour la partie électronique (14) de l'installation de régulation et de commande (9).

7. Véhicule automobile selon la revendication 6, caractérisé en ce que les seuils de commutation (S ; S₁, S₂) sont repérés pour le conducteur par des points de pression perceptibles lors de l'actionnement de la pédale de frein (10) et qu'il faut d'abord vaincre pour déclencher le signal de seuil de commutation correspondant.
